# EUROPÄISCHE PATENTANMELDUNG

(11) **EP 1 006 318 A1**
(43) Veröffentlichungstag der Anmeldung: **07.06.2000**
(21) Anmeldenummer: 98123181.4
(22) Anmeldetag: 04.12.1998
(51) Int. Cl.: F24D 3/14

(54) **Einrichtung zum Beheizen und/oder Kühlen vom Räumen**

(71) Anmelder: Polygo Holding GmbH, 94559 Niederwinkling (DE)
(72) Erfinder: Steiner, Martin, 33070 Ybbs (AT)

(57) **Zusammenfassung**

Die Erfindung betrifft eine Einrichtung zum Heizen und/oder Kühlen von Räumen, beispielsweise für Wohn- und Büroräume, mit von einem Heiz- oder Kühlmedium durchströmbaren Leitungen (4) die in einer gut wärmeleitenden Schicht (5) beispielsweise aus einem erhärteten hydraulischen Bindemittel eingebettet sind, die mit einer Trägerplatte (1) aus einem schlecht wärmeleitenden Werkstoff verbunden ist. Um eine gleichmäßige Temperaturverteilung bei sparsamen Materialeinsatz zu erzielen, ist vorgesehen, daß die Trägerplatte (1) auf ihrer dem zu temperierenden Raum zugewandten Seite ein Profil aufweist, das im Querschnitt etwa Wellenform, also Erhebungen (2) und Vertiefungen (3) besitzt, die über einen flachen Flankenwinkel ineinander übergehen, wobei die Leitungen (4) im Bereich der Wellentäler (3) der Trägerplatte (1), eingebettet in einer gut wärmeleitenden Schicht mit Abstand vom Rand und dem Wellental, verlaufen.

## Beschreibung

Die Erfindung bezieht sich auf eine Einrichtung gemäß dem Oberbegriff des Anspruches 1.

Solche Einrichtungen sind an sich bekannt. So sind beispielsweise in der GB 2 035 435 A, oder der AT 381 160 B Einrichtungen beschrieben, bei denen von einer im wesentlichen ebenen Trägerplatte Noppen aufragen, deren Mantelflächen im von senkrecht zur Oberseite der Trägerplatte verlaufenden Erzeugenden gebildet sind. Die von einem Heiz- oder Kühlmedium durchströmbaren Leitungen sind dabei zwischen den Noppen verlegt.

Die DE 33 00 607 C2 betrifft eine während der Verlegearbeiten begehbare Flüssigkeitsflächenheizung für Fußböden, bei der die Heizrohre in Estrich eingebettet sind, wozu muldenförmige Kanäle vorgesehen sind, in denen die Rohre, vor möglichen Beschädigungen und Veränderungen der Lage derselben geschützt, verlegt sind.

Bei der aus der GB 2 035 435 A bekannten Lösung werden die zwischen den Noppen eingelegten Leitungen mit einem Kleber relativ dick überstrichen und anschließend eine Abdeckplatte aufgeklebt. Dabei wird der Raum zwischen den Leitungen und der Abdeckplatte teilweise ausgefüllt.

Bei der Einrichtung nach der AT 381 160 B werden die Noppen nur überdeckt, wobei Hohlräume verbleiben, durch die Luft strömen kann.

Durch die AT 403 396 B wurde eine Einrichtung der eingangs erwähnten Art bekannt, bei der die Trägerplatte mit Rippen versehen ist zwischen denen die Leitungen eingebettet sind. Dabei sind die Zwischenräume zwischen den Rippen mit einem aushärtenden hydraulischen Bindemittel eingebettet. Überdeckt sind die Rippen der Trägerplatte und die Einbettungen der Leitungen von einer gut wärmeleitenden Putzschicht, dabei verlaufen die Seitenwände der Rippen der Trägerplatte, abgesehen von Ausrundungen im Fuß und Kopfbereich, im wesentlichen senkrecht zur Oberseite der Trägerplatte. Da die Breite der Rippen den Abstand der Leitungen voneinander bestimmt, ergeben sich in der Regel relativ breite Bereiche in denen die meist nur dünne gut wärmeleitende Putzschicht auf den Rippen der wärmeisolierenden Trägerplatte aufliegt. Dies führt dazu, daß sich an der dem zu klimatisierende Raum zugewandten Seite der Einrichtung Streifen unterschiedlicher Temperatur ausbilden und mit der Zeit sich auf der Wand-, bzw. Deckenoberfläche abbilden. Die Temperaturunterschiede können, je nach den örtlichen Gegebenheiten, mehrere °C betragen, was im Betriebszustand 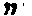 Heizung" zu ungleichmäßiger Wärmestrahlung und Schmutzansammlungen auf der Wand- bzw. Deckenoberfläche führt und im Betriebszustand 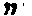 Kühlung" eine zusätzliche Bildung von Kondenswasser an der Wandoberfläche begünstigt.

Der Erfindung, wie sie in den Ansprüchen beschrieben ist, liegt die Aufgabe zugrunde, bei einer Einrichtung der eingangs erwähnten Art die Nachteile des Standes der Technik zu vermeiden, insbesondere eine rasche Regelbarkeit des Systems bei geringstmöglichem Einsatz an Speichermasse und guter Wärmeleitung zu erzielen, sowie großflächig eine gleichmäßige Oberflächentemperatur auf der dem zu klimatisierenden Raum zugewandten Seite zu erzielen.

Durch die vorgeschlagenen Merkmale ergibt sich der Vorteil, daß sich bei mit einem erhärteten hydraulischen Bindemittel ausgefüllten Vertiefungen der Trägerplatte ein sehr großer Flächenanteil von eben diesem Bindemittel ausgefüllt ist. Dadurch ergibt sich eine sehr weitgehende Vergleichmäßigung der Wärmeverteilung und Oberflächentemperatur der Einrichtung an deren dem zu klimatisierenden Raum zugekehrten Seite von nur 0,2 bis 0,3 °C, d.h. ein etwa um den Faktor 10 geringerer Wert gegenüber dem Stand der Technik. Außerdem zeichnen sich die erfindungsgemäße Einrichtung durch eine eher geringes Maß an Wärmespeicherung aus, wodurch eine rasche Regelbarkeit gegeben und die Bildung von Kondenswasser an der Oberfläche vermieden ist. Ein weiterer Vorteil liegt in der einfachen Montage vor Ort, insbesondere in der Befestigung der Einrichtung auf dem Untergrund.

Dies ist u.a. auch für die wirtschaftliche Nutzung von NiedrigenergieHäusern von Bedeutung, aber auch für Gebäude die oftmals nur einige Stunden am Tag beheizt werden müssen, wie beispielsweise u.a. Schulen, Kindergärten, Kirchen, Wochenendhäuser u. dgl..

Die Erfindung ist nachstehend anhand eines in den Abbildungen dargestellten Ausführungsbeispieles näher erläutert.

Es zeigt:
Fig. 1: einen Schnitt durch eine Trägerplatte,
Fig. 2: eine Einrichtung als Wandelement
Fig. 3: eine Einrichtung als Deckenelement und
Fig. 4: eine Draufsicht auf die Trägerplatte gem. Fig. 1.

Die Einrichtung gem. der Erfindung besteht im wesentlichen aus einer Trägerplatte 1 aus einem Wärme und Schall schlecht leitenden Werkstoff, beispielsweise aus einem gepreßten Fasermaterial, z.B. aus Hanf. Anstelle von Hanf können auch mineralische Faserstoffe, Kunststoff-Schaumstoffe etc. mit Vorteil dafür eingesetzt werden.

Diese Trägerplatte 1 weist an ihrer einen Seite eine wellenförmige Profilierung in Form von vorzugsweise abgerundeten Erhebungen 1a und Vertiefungen 1b auf. Die Erhebungen weisen Flankenwinkel auf, die ca. 30° betragen. Diese Flankenwinkel können in einem erheblichen Ausmaß schwanken, betragen aber weniger als 45°. Die Erhebungen 1a und die Vertiefungen 1b weisen einen vorzugsweise abgerundeten Querschnitt auf, um Rißbildungen durch Temperaturwechsel in der dünnen aufzubringenden Putzschicht 11 zu vermeiden.

Im Bereich der Vertiefungen 1b sind Leitungen 4 vorgesehen, die von einem Heiz- oder Kühlmedium durchströmt sind und in einer Schicht 7 aus einem gut wärmeleitenden Werkstoff, beispielsweise einem erhärteten hydraulischen Bindemittel eingebettet sind. Bei dieser wärmeleitenden Schicht 7 kann es sich z.B. um Mörtel, einen Fließestrich, -beton oder Putz handeln, dem auch Metallfasern oder Metallpartikel beigemengt sein können. Diese Schicht 7 ist dünn ausgebildet, d.h. die Rohre 5 sind damit nur wenig überdeckt, damit einerseits ein rasches Ansprechen der Einrichtung gewährleistet und andererseits eine effektive Temperaturregelung möglich ist. So beträgt die Temperaturdifferenz an der Decken-, bzw. Wandoberfläche zwischen den Erhebungen 1a und den Vertiefungen 1b der Trägerplatte 1 beträgt bei einem Durchmeser der Rohre 5 von 8 mm und einem Abstand derselben voneinander von ca. 60 mm nur 0,2 bis 0,3 °C gegenüber etwa 3,2 °C bei einer ebenen Trägerplatte mit gleichen Rohrabständen und - dimensionen.

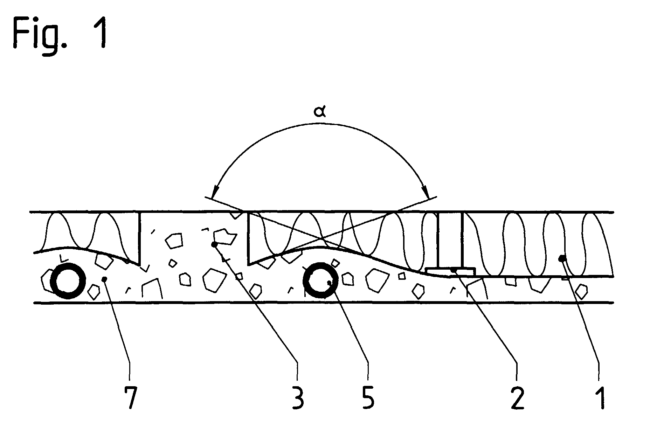

Bei der Ausführungsform nach der Fig. 1 füllt diese wärmeleitende Schicht 5 lediglich die Vertiefungen 1b der Trägerplatte 1 aus. An der dem zu klimatisierenden Raum zugekehrten Seite ist bei dieser Ausführungsform eine Abdeckplatte 9 aus einem gut wärmeleitenden Material, wie z.B. Metall vorgesehen, die mit der Schicht 7 und den Erhebungen 1a der Trägerplatte 1 gut wärmeleitend verbunden ist.

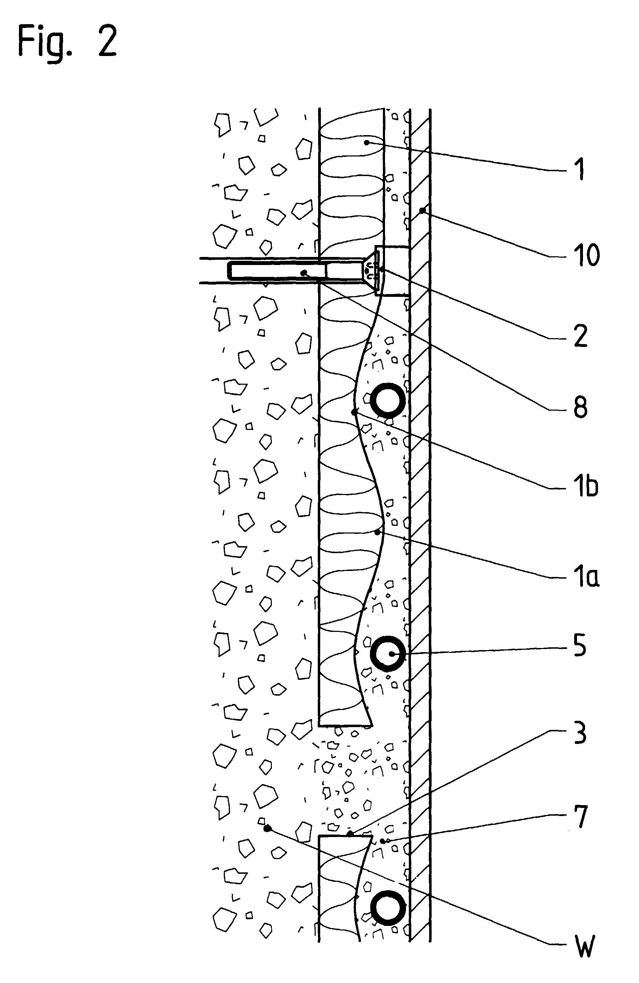

Die Ausführungsform gem. Fig. 2 zeigt, daß die gut wärmeleitende Schicht 7 auch die Oberseiten der Erhebungen 2 der Trägerplatte 1 überdeckt. Dabei ist diese Schicht 7 beispielsweise mit einem Glasfasergewebe 9 oder dergl. abgedeckt und darauf eine Putzschicht 11 aufgebracht.

Zweckmäßigerweise wird das Glasfasergewebe 9 auf die noch feuchte Schicht 7 aufgebracht und auf dieses bei noch feuchter Schicht 7 eine dünne Putz- oder Estrichschicht 11 aufgebracht.

Da aufgrund der relativ kleinen Flankenwinkel und bei den hohen Abständen der Rohre 5 voneinander die Oberseiten der Erhebungen 1a der Trägerplatte 1, die aus einem gut wärmeisolierenden Werkstoff hergestellt ist, nur schmale Streifen bilden, ergibt sich an der dem zu klimatisierenden Raum zugekehrten Seite der Einrichtung eine weitgehend gleichmäßige Temperatur

Durch Öffnungen 2 in der Trägerplatte sind Befestigungsmittel, beispielsweise Dübel 8 geführt und die Trägerplatte 1 damit an der Wand befestigt.

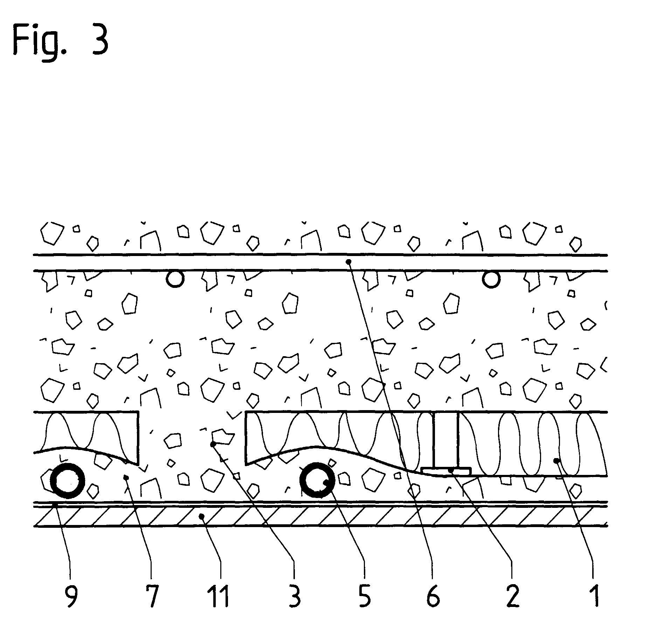

Die Befestigung der Trägerplatte1 an ihrer Auflage kann auch, wie in Fig. 3 anhand eines Elementes für Deckenbefestigung dargestellt, dadurch erreicht werden, daß Fließestrich, -beton oder Putz von hinten durch die Öffnungen 3 fließt und das Wellenprofil der Trägerplatte ausfüllt, wobei die Rohre 5 gleichzeitig mit umflossen und somit eingebettet sind. Zur Herstellung dieses Ausführungsbeispieles dient zweckmäßigerweise eine Holzschalung 12 oder dergl., die auf die Erhebungen 1a der Trägerplatte 1 gelegt ist und nach dem Aushärten des Betons oder dergl. entfernt und raumseitig durch eine Abdeckplatte 10 ersetzt wird. Anstelle der Abdeckplatte 10 kann beispielsweise auch ein einlagiger Dünnputz 11 aufgebracht werden. Ein in den Beton der Decke eingelegtes Bewehrungsgitter ist mit 6 bezeichnet.

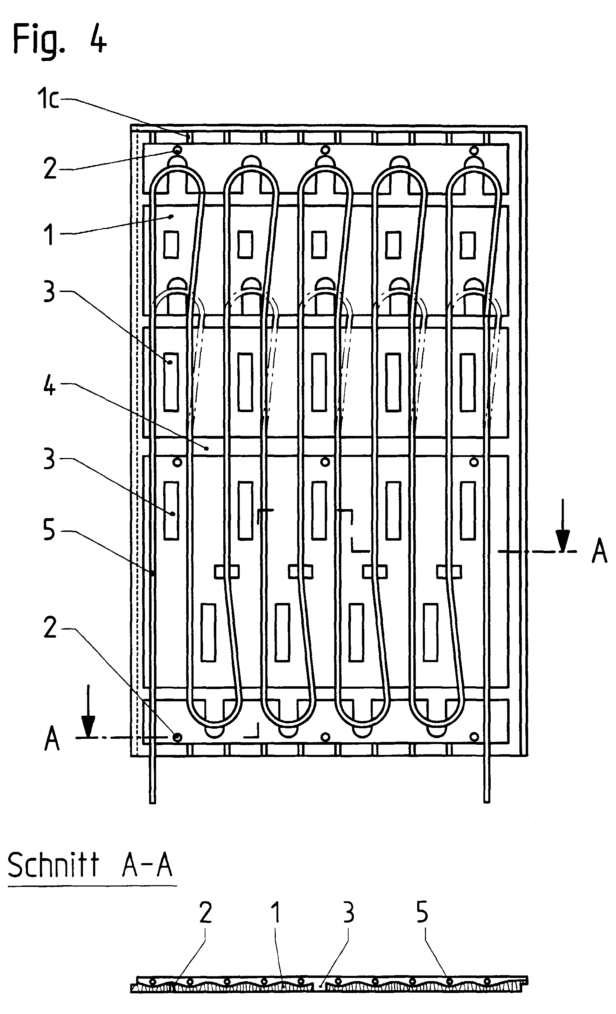

Eine Trägerplatte 1 ist in Fig. 4 dargestellt. Diese Trägerplatte aus schlecht wärmeleitenden Werkstoff ist mit den Befestigungsöffnungen, d.h. Durchbrüchen 2 für Befestigungsmittel an einer Wand W z.B. Dübel 8 und Durchbrüche 3 für den Durchtritt von Fließbeton oder dergl. versehen. Die Heiz- bzw. Kühlmedium führenden Rohre 5 sind auf der Trägerplatte 1 vorzugsweise in Wendeln verlegt und in den Fließbeton, Putz oder dergl. derart eingebettet, daß sie nicht den Boden der Vertiefungen 1b berühren, wozu in Abständen auf der Trägerplatte 1 angeordnete Haltestege 4 dienen. Diese Haltestege 4 können an den Wendepunkten der Rohre 5 zusätzlich zu den vertikalen Rillen auch horizontale Rillen für die für die Wendeschleifen enthalten.

Die Trägerplatte 1 ist vorzugsweise aus einem Fasermaterial, wie z.B. Hanf oder Mineralwolle usw. oder Kunststoffschaum vorgefertigt und werkseitig mit den Rohren 5, die in den Haltestegen 4 festgelegt sind ausgerüstet. Eine solche Trägerplatte kann in seiner vollen Höhe und/oder Breite mit Rohren 5 belegt sein, es kann aber auch, je nach den Gegebenheiten, nur teilweise belegt sein. Die Trägerplatte 1 kann an sämtlichen vier Seiten mit weiteren solchen Trägerplatten zu großen Rohrregistern verbunden werden, wobei die Rohre 5 durch Schlitze 1c zu den benachbarten Trägerplatten, bzw. den Zu- und Rücklaufleitungen geführt sind. Mit auf dieser Weise hergestellten Rohrregistern können die Wände und/oder Decken, aber auch Böden mit der erfindungsgemäß vorgeschlagenen Einrichtung zum Beheizen und Kühlen von Räumen ausgestattet werden.

Die Erfindung ist selbstverständlich nicht auf das beschriebene Beispiel beschränkt. Es können beispielsweise anstelle von fluidführenden Rohren 5 auch elektrische Heizkabel oder eine Kombination von beiden auf der Trägerplatte 1 verlegt oder, für spezielle Anwendungen, piezoelektrische Elemente etc. angeordnet werden usw..

### Bezugszeichenliste

- 1: Trägerplatte, 1a: Wellenberg, 1b: Wellental, 1c: Schlitze
- 2: Durchbruch für Dübelbefestigung
- 3: Durchbruch für Fließbeton etc.
- 4: Haltestege für Rohre
- 5: Rohre
- 6: Bewehrungsgitter
- 7: Fließestrich, -beton,
- 8: Dübel
- 9: Glasfasergewebe
- 10: Abdeckplatte
- 11: Dünnputz
- 12: Holzschalung

## Patentansprüche

1. Einrichtung zur Heizen und/oder Kühlen, von Räumen, beispielsweise für Wohn- und Büroräume, mit einer Trägerplatte, auf der von einem Heiz- oder Kühlmedium durchströmbaren Leitungen (5), sogen. Rohrregister, verlegt sind, die in einer gut wärmeleitenden Schicht (7) beispielsweise aus einem erhärteten hydraulischen Bindemittel eingebettet sind, **dadurch gekennzeichnet**, daß die Trägerplatte (1) der Einrichtung durch ein Wellenprofil gebildet ist, das im Querschnitt an der dem zu klimatisierenden Raum zugewandten Seite der Trägerplatte (1) die Erhebungen (1a) und Vertiefungen (1b) aufweist, die über einen flachen Flankenwinkel (α) ineinander übergehen, wobei die Leitungen (5) im Bereich der Vertiefungen (1b) der Trägerplatte (1) in einem bestimmten Abstand zu deren tiefsten Punkt verlaufen und von einer dünnen Masseschicht überdeckt sind.

2. Einrichtung, nach Anspruch 1, **dadurch gekennzeichnet**, daß die wärmeleitende Schicht (7), in der die Leitungen (5) eingebettet sind, samt den Erhebungen (1a) der Trägerplatte (1) an ihren freien Seiten mit einer dünnen Putz- oder Estrichschicht (11) überdeckt sind.

3. Einrichtung nach Anspruch 1 und 2, **dadurch gekennzeichnet**, daß in die Putzschicht (11) ein Glasfastergewebe(9) eingelegt ist.

4. Einrichtung nach Anspruch 1 bis 3, **dadurch gekennzeichnet**, daß die Trägerplatte (1) aus gepreßtem Fasermaterial hergestellt ist.

5. Einrichtung nach Anspruch 4, **dadurch gekennzeichnet**, daß als Werkstoff für die Trägerplatte (1) Hanf eingesetzt ist.

6. Einrichtung nach Anspruch 1 bis 5, **dadurch gekennzeichnet**, daß die Trägerplatte (1) aus einem Schaumstoff besteht.

7. Einrichtung nach Anspruch 1 und einen der folgenden, **dadurch gekennzeichnet**, daß der Flankenwinkel (α) < 45° ist.

8. Einrichtung nach Anspruch 1 und einen der folgenden, **dadurch gekennzeichnet**, daß der Abstand der Leitung (5) vom tiefsten Punkt der Vertiefung (1b) etwa 20% des Rohrdurchmessers beträgt.

9. Einrichtung nach Anspruch 1 und einen der folgenden, **dadurch gekennzeichnet**, daß im Bereich der Erhebungen (1a) der Trägerplatte (1) Durchbrüche (2) und (3) vorgesehen sind.

10. Einrichtung nach Anspruch 1 und einen der folgenden, **dadurch gekennzeichnet**, daß die Erhebungen (1a) und Vertiefungen (1b) abgerundet sind.
